# EUROPÄISCHE PATENTSCHRIFT

(11) **EP 0 775 054 B1**
(45) Veröffentlichungstag und Bekanntmachung des Hinweises auf die Patenterteilung: **09.08.2000**
(21) Anmeldenummer: 96918650.1
(22) Anmeldetag: 30.05.1996
(51) Int. Cl.: B32B 31/12, B32B 15/08, B26F 1/38

(54) **VERFAHREN ZUR HERSTELLUNG EINES SCHICHTVERBUNDES**
PROCESS FOR PRODUCING A LAMINATE
PROCEDE DE FABRICATION D'UN PRODUIT MULTICOUCHE

(30) Priorität: 13.06.1995 DE 19521022
(43) Veröffentlichungstag der Anmeldung: 28.05.1997
(73) Patentinhaber: W.C. Heraeus GmbH & Co. KG, 63450 Hanau (DE)
(72) Erfinder: HERKLOTZ, Günther, D-63486 Bruchköbel (DE); ULLRICH, Karl-Heinz, D-64823 Gross-Umstadt (DE); BAUER, Alfred, D-63755 Alzenau (DE); HARTMANN, Horst, D-63454 Hanau (DE); LOOSE, Thomas, D-63594 Hasselroth (DE)
(74) Vertreter: Kühn, Hans-Christian
(86) Internationale Anmeldenummer: EP9602330
(87) Internationale Veröffentlichungsnummer: WO9641719

(56) Entgegenhaltungen:
- CH-A- 608 314
- DE-A- 2 939 014
- DE-C- 4 340 996
- GB-A- 2 182 596
- US-A- 4 555 291
- US-A- 5 171 386

## Beschreibung

Die Erfindung betrifft ein Verfahren zur Herstellung eines Schichtverbundes aus mindestens zwei Folienbahnen, bei dem in einer Stanzeinrichtung in die Folienbahnen sich in gleichen Abständen wiederholende Stanzstrukturen eingebracht werden und bei dem die Folienbahnen nach dem Einbringen der Stanzstrukturen derart aufeinander geklebt werden, daß die Stanzstrukturen der miteinander verklebten Folienbahnen eine vorbestimmte Lage zueinander aufweisen. Die Erfindung betrifft weiterhin eine Vorrichtung zur Herstellung eines Schichtverbundes.

Eine derartige Vorrichtung ist beispielsweise aus der DE 29 39 014 bekannt. In dieser Druckschrift wird das Aufeinanderkleben einer Metallfolienbahn und einer Kunststoff-Folienbahn beschrieben. Vor dem Aufeinanderkleben laufen beide Folienbahnen unabhängig voneinander durch Stanzen, in denen verschiedene Stanzstrukturen in die jeweiligen Folienbahnen gestanzt werden. Um einen Versatz der beiden Folienbahnen gegeneinander zu verhindern bzw. zu verringern, der durch unterschiedliche Ausdehnungskoeffizienten der Materialien der Folienbahnen entsteht, ist eine recht aufwendige Regelung installiert, über die die Geschwindigkeit der Folienbahnen geändert werden kann.

Aus der WO-92/15118 ist es weiterhin bekannt, zwei Folienbahnen, die Stanzmarkierungen aufweisen, derart aufeinander zu bringen, daß die Stanzmarkierungen der einen Folienbahn an der gleichen Stelle des Folienverbundes angeordnet sind, wie die Stanzmarkierungen der zweiten Folienbahn. Dazu wird die Lage der Stanzmarkierungen überwacht und ein eventueller Versatz zwischen den Stanzmarkierungen dadurch ausgeglichen, daß die Größe dieses Versatzes gemessen wird und entsprechend dieser Größe die beiden Folienbahnen vor dem Zusammenfügen mit einer unterschiedlichen Temperatur beaufschlagt werden, um durch die dadurch bewirkte unterschiedliche Ausdehnung der beiden Folienbahnen den Versatz auszugleichen. Zusätzlich kann dabei eine Folienbahn mit einer Zugspannung beaufschlagt werden, so daß die dadurch erzeugte Dehnung dieser Folienbahn zum Ausgleich des Versatzes beiträgt. Ein derartiges Verfahren erfordert ebenfalls einen hohen apparativen Aufwand, um die unterschiedliche Temperaturbeaufschlagung der beiden Folienbahnen zu realisieren und um zu gewährleisten, daß die erforderlichen Temperaturänderungen in einer sehr kurzen Zeit erfolgen können, um den Abschnitt des Folienverbundes, der diesen Versatz aufweist, möglichst klein zu halten.

In beiden Fällen ist eine aufwendige und relativ komplizierte Regelung erforderlich, die in der Regel auch reaktionsträge ist. Ein eventueller Versatz kann nicht sofort beseitigt werden; vor einer Korrektur des Vorschubes und damit vor einer Beseitigung des Versatzes wird regelmäßig eine längere Strecke des Folienverbundes mit Versatz hergestellt. Dieses Stück ist jedoch für eine weitere Verarbeitung, beispielsweise zu Chip-Karten, nicht mehr zu gebrauchen.

Abgeleitet aus dem vorstehend beschriebenen Stand der Technik besteht die Aufgabe der vorliegenden Erfindung darin, ein Verfahren anzugeben, mit dem mehrere Folienbahnen auf möglichst einfache Weise und paßgenau zu einem Schichtverbund verklebt werden können. Die Aufgabe der vorliegenden Erfindung besteht weiterhin darin, eine Vorrichtung zur Durchführung dieses Verfahrens anzugeben.

Erfindungsgemäß wird die Aufgabe für das eingangs charakterisierte Verfahren dadurch gelöst, daß die Folienbahnen nacheinander der gleichen Stanzeinrichtung zugeführt werden, wobei in einem ersten Teil der Stanzeinrichtung in die Folienbahnen identische Positionsmarkierungen gestanzt werden und danach in einem zweiten, austauschbaren Teil der Stanzeinrichtung in jede Folienbahn eine für die jeweilige Folienbahn charakteristische Folienstruktur gestanzt wird, wobei der zweite Teil der Stanzeinrichtung jeweils nach dem Durchgang einer Folienbahn durch die Stanzeinrichtung ausgetauscht wird. Die erfindungsgemäße Vorrichtung zur Herstellung eines Schichtverbundes aus mehreren Folienbahnen weist eine Stanzeinrichtung und eine Laminiereinrichtung auf und ist dadurch gekennzeichnet, daß die Stanzeinrichtung zwei voneinander unabhängige, in einem festgelegten Abstand zueinander angeordnete Stanzwerkzeuge zur Stanzung je einer Folienbahn aufweist und daß der zweite Teil der Stanzwerkzeuge austauschbar ist. Die der Stanzeinrichtung zugeführten Folienbahnen werden in der Regel von Transportspulen abgewickelt. Die Folienbahnen können nach dem Verlassen der Stanzeinrichtung, in der sich periodisch wiederholende Stanzstrukturen in die Folienbahnen eingebracht wurden, auf weitere Spulen zur Zwischenlagerung aufgewickelt werden. Von diesen Spulen oder gegebenenfalls auch direkt aus der Stanzeinrichtung kommend, werden die Folienbahnen übereinander liegend der Klebeeinrichtung zugeführt und können hier derart justiert werden, daß die Stanzstrukturen eine vorbestimmte Lage zueinander aufweisen. Dieser Verfahrensschritt des Miteinanderverklebens kann in bekannter Weise erfolgen, wobei die Folienbahnen beispielsweise durch Führungsdorne justiert werden können, die an einer Vorschubeinrichtung der Laminiereinrichtung angeordnet sind und die in die Positionsmarkierungen der Folienbahnen eingreifen. Dazu weist die Laminiereinrichtung neben der Vorschubeinrichtung und den Führungsdornen eine Vorrichtung zum Anbringen von Heftpunkten an den Folienbahnen sowie eine Vorrichtung zum ganzflächigen Verkleben der Folienbahnen auf. Dadurch, daß die miteinander zu verklebenden Folienbahnen die gleiche Stanzeinrichtung durchlaufen und vor dem Verkleben keiner unterschiedlichen Wärme- oder Zugbelastung ausgesetzt werden müssen, ist ein möglicher Versatz der Stanzstrukturen der Folienbahnen vemachlässigbar und tritt nicht in Form eines Summenfehlers auf.

In einer besonderen Ausführung des erfindungsgemäßen Verfahrens werden eine Metallfolienbahn und eine Kunststoff-Folienbahn gestanzt und miteinander verklebt oder es werden eine Metallfolienbahn und mindestens zwei Kunststoff-Folienbahnen gestanzt und miteinander verklebt, wobei zuerst die Metallfolienbahn mit einer Kunststoff-Folienbahn verklebt und danach die zweite Kunststoff-Folienbahn auf die Metallfolienbahn oder auf die erste Kunststoff-Folienbahn geklebt wird. Für die exakte Justierung der miteinander zu verklebenden Folienbahnen können vor und/oder während des Verklebens der Folienbahnen Führungsdorne, die an einer Vorschubeinrichtung angeordnet sind, in übereinander liegende Positionsmarkierungen der miteinander zu verklebenden Folienbahnen eingreifen.

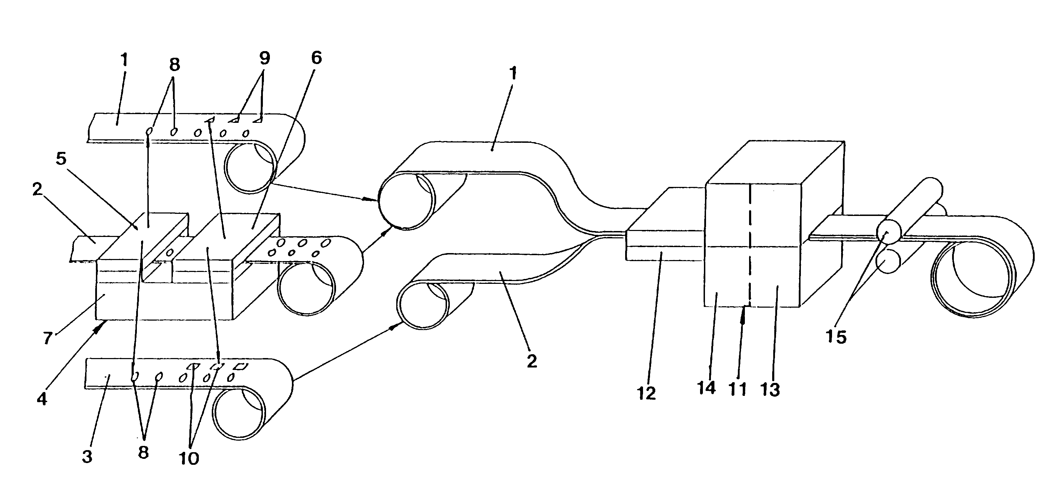

Nachfolgend wird die Erfindung anhand eines Ausführungsbeispieles und einer Zeichnung näher erläutert. In der Zeichnung ist die erfindungsgemäße Vorrichtung schematisch dargestellt.

Eine Kunststoff-Folienbahn 1, eine Metallfolienbahn 2 und eine weitere Kunststoff-Folienbahn 3 durchlaufen nacheinander eine Stanzeinrichtung 4, die die Stanzwerkzeuge 5 und 6 aufweist. Diese Stanzwerkzeuge 5 und 6 sind auf einem gemeinsamen Träger 7 angeordnet. Das Stanzwerkzeug 5 enthält Stanzstempel zum Ausstanzen von Positionsmarkierungen 8, die in alle drei Folienbahnen 1; 2; 3 gleichermaßen eingestanzt werden. Das Stanzwerkzeug 6 ist austauschbar und enthält Stanzstempel, die entsprechend der in die jeweilige Folienbahn 1; 2; 3 einzubringenden Folienstrukturen 9; 10 ausgebildet sind. Der Einfachheit halber sind in der Zeichnung die Folienstrukturen der Metallfolienbahn 2 nicht dargestellt. Diese Folienstrukturen 9; 10 sind für die jeweilige Folienbahn 1; 2; 3 charakteristisch. Nacheinander durchlaufen die Folienbahnen 1; 2; 3 das Stanzwerkzeug 4, wobei nach dem Durchlauf einer Folienbahn das Stanzwerkzeug 6 ausgetauscht wird. Nach dem Durchlauf der Folienbahnen 1; 2; 3 durch die Stanzeinrichtung 4 werden die Folienbahnen 1; 2; 3 zunächst aufgerollt. Anschließend werden die aus einem glasfaserverstärkten Kunststoffmaterial gebildete Kunststoff-Folienbahn 1 und die Metallfolienbahn 2 an ihrem Anfang zusammengelegt und in die Laminiereinrichtung 11 eingeführt. Dabei werden die Positionsmarkierungen 8 manuell so übereinander gelegt, daß sie von Führungsdorne erfaßt werden, die sich an einer Transporteinrichtung befinden (ähnlich DE 43 40 996 C1). Diese Führungsdornen sowie die Transporteinrichtung sind hinreichend bekannt und können im Prinzip ähnlich aufgebaut sein, wie der Filmtransport eines Fotoapparates. In der Zeichnung sind die Stanzstrukturen 8; 10 der die Laminiereinrichtung 11 durchlaufenden Folienbahnen nicht dargestellt. Die Führungsdorne erfassen die Folienbahnen 1; 2 in einem ersten Teil 12 der Laminiereinrichtung 11 und transportieren die beiden Folienbahnen 1; 2 durch die Heftstation 14 und die Klebestation 13 hindurch. Ein Summenfehler, hervorgerufen durch die unterschiedlichen Wärmeausdehnungen beim Laminieren der Folienbahnen 1 und 2 wird durch das Anbringen von Heftpunkten zwischen den Folienbahnen in der Heftstation 14 verhindert. In der Klebestation 13 werden die beiden Folienbahnen 1; 2 anschließend ganzflächig miteinander verklebt, wobei die Folienbahnen 1; 2 für etwa 30 Sekunden einer Temperatur von etwa 180° ausgesetzt sind.

Hiernach erfolgt eine kontinuierliche Rollenlaminierung durch ein Walzenpaar 15 gemäß dem Stand der Technik.

Der derart entstandene Schichtverbund kann dann mit der zweiten Kunststoff-Folie 3 zusammengelegt und in gleicher Weise in die Laminiereinrichtung 11 eingeführt werden, wie oben beschrieben. Dadurch entsteht ein Schichtverbund aus drei Folien, bei dem die Metallfolie 2 in der Mitte angeordnet ist. Es ist allerdings auch denkbar, die beiden Kunststoff-Folien 1; 3 direkt aufeinander zu bringen oder den Schichtverbund lediglich aus einer Kunststoff-Folienbahn 1 und einer Metallfolienbahn 2 zu bilden.

Der derart gebildete Schichtverbund weist keinen Versatz auf, da die einzelnen Folienbahnen 1; 2; 3 aufgrund der konstanten Anordnung der verschiedenen Stanzwerkzeuge 5; 6 zueinander keinen Versatz über die Folienbahnlänge aufweisen. Da die Folienbahnen beim Einschieben in die Laminiereinrichtung 11 in ihrer Lage zueinander durch Heftpunkte fixiert werden, entsteht auch hier kein sich über die Länge der Folienbahnen addierender Versatz.

## Patentansprüche

1. Verfahren zur Herstellung eines Schichtverbundes aus mindestens zwei Folienbahnen, bei dem in einer Stanzeinrichtung in die Folienbahnen sich in gleichen Abständen wiederholende Stanzstrukturen eingebracht werden und bei dem die Folienbahnen nach dem Einbringen der Stanzstrukturen derart aufeinander geklebt werden, daß die Stanzstrukturen der miteinander verklebten Folienbahnen eine vorbestimmte Lage zueinander aufweisen, dadurch gekennzeichnet, daß die Folienbahnen (1; 2: 3) nacheinander der gleichen Stanzeinrichtung (4) zugeführt werden, wobei in einem ersten Teil (5) der Stanzeinrichtung (4) in die Folienbahnen (1; 2; 3) identische Positionsmarkierungen (8) gestanzt werden und danach in einem zweiten, unabhängigen, in einem festgelegten Abstand zum ersten Teil (5) angeordneten, austauschbaren Teil (6) der Stanzeinrichtung (4) in jede Folienbahn (1; 2; 3) eine für die jeweilige Folienbahn (1; 2; 3) charakteristische Folienstruktur (9; 10) gestanzt wird, wobei der zweite Teil (6) der Stanzeinrichtung (4) jeweils nach dem Durchgang einer Folienbahn durch die Stanzeinrichtung (4) ausgetauscht wird.

2. Verfahren nach Anspruch 1, dadurch gekennzeichnet, daß eine Metallfolienbahn (2) und eine Kunststoff-Folienbahn (1) gestanzt und miteinander verklebt werden.

3. Verfahren nach Anspruch 1, dadurch gekennzeichnet, daß eine Metallfolienbahn (2) und mindestens zwei Kunststoff-Folienbahnen (1; 3) gestanzt und miteinander verklebt werden, wobei zuerst die Metallfolienbahn (2) mit einer Kunststoff-Folienbahn (1) verklebt und danach die zweite Kunststoff-Folienbahn (3) auf die Metallfolienbahn (2) oder auf die erste Kunststoff-Folienbahn (1) geklebt wird.

4. Verfahren nach einem der Ansprüche 1 bis 3, dadurch gekennzeichnet, daß vor und/oder während des Verklebens der Folienbahnen (1; 2; 3) Führungsdorne in übereinander liegende Positionsmarkierungen (8) der miteinander zu verklebenden Folienbahnen (1; 2; 3) eingreifen.

5. Vorrichtung zur Herstellung eines Schichtverbundes aus mehreren Folienbahnen (1; 2; 3) mit einer Stanzeinrichtung (4) und einer Laminiereinrichtung (11), dadurch gekennzeichnet, daß die Stanzeinrichtung (4) zwei voneinander unabhängige, in einem festgelegten Abstand zueinander angeordnete Stanzwerkzeuge (5; 6) zur Stanzung jeweils einer Folienbahn (1; 2; 3) mit beiden Stanzwerkzeugen (5; 6) aufweist und daß der zweite Teil (6) der Stanzwerkzeuge (5; 6) austauschbar ist.

6. Vorrichtung nach Anspruch 5, dadurch gekennzeichnet, daß die Laminiereinrichtung (11) eine Vorschubeinrichtung (12) mit Führungsdornen, eine Vorrichtung (14) zur Anbringung von Heftpunkten sowie eine Vorrichtung (13) zum ganzflächigen Verkleben aufweist.

## Claims

1. Process for producing a laminate consisting of at least two foil webs in which equidistantly repeated stamped structures are applied to the foil webs in a stamping unit and in which, after the application of the stamped structures, the foil webs are bonded together in such a way that the stamped structures of the bonded foil webs are in predetermined relative positions, characterized in that the foil webs (1; 2; 3) are fed one after the other to the same stamping unit (4), in which identical position markings (8) are stamped into the foil webs (1; 2; 3) in a first part (5) of the stamping unit (4) and then a foil structure (9; 10) specific to each foil web (1; 2; 3) is stamped into each foil web (1; 2; 3) in a second, independent, exchangeable part (6) of the stamping unit (4) located at a set distance from the first part (5), the second part (6) of the stamping unit (4) being exchanged after each passage of a foil web through the stamping unit (4).

2. Process according to Claim 1, characterized in that one metal foil web (2) and one plastic foil web (1) are stamped and bonded together.

3. Process according to Claim 1, characterized in that one metal foil web (2) and at least two plastic foil webs (1; 3) are stamped and bonded together, in which the metal foil web (2) is first bonded to one plastic foil web (1) and the second plastic foil web (3) is then bonded to the metal foil web (2) or to the first plastic foil web (1).

4. Process according to any one of Claims 1 to 3, characterized in that before and/or during the bonding of the foil webs (1; 2; 3) locating pins engage in superimposed position markings (8) of the foil webs (1; 2; 3) to be bonded together.

5. Apparatus for producing a laminate consisting of a plurality of foil webs (1; 2; 3) with a stamping unit (4) and a laminating unit (11), characterized in that the stamping unit (4) has two independent stamping tools (5; 6) located at a set distance from each other for stamping each foil web (1; 2; 3) separately with both stamping tools (5; 6) and in that the second part (6) of the stamping tools (5; 6) is exchangeable.

6. Apparatus according to Claim 5, characterized in that the laminating unit (11) has a feed unit (12) with locating pins, a device (14) for applying bonding points and a device (13) for whole-area bonding.

## Revendications

1. Procédé de fabrication d'un composite multicouche à partir d'au moins deux feuilles continues, dans le cas duquel, dans un dispositif de poinçonnage, on exécute dans les feuilles continues des structures de poinçonnage qui se répètent à intervalles égaux et dans le cas duquel, après l'exécution des structures de poinçonnage, on colle les feuilles continues l'une sur l'autre de façon que les structures de poinçonnage des feuilles continues, collées l'une sur l'autre, présentent une position déterminée l'une par rapport à l'autre, caractérisé par le fait que l'on amène l'une après l'autre les feuilles continues (1 ; 2 ; 3) au même dispositif de poinçonnage (4), étant précisé que dans une première partie (5) du dispositif de poinçonnage (4) on poinçonne dans les feuilles continues (1 ; 2 ; 3) des repères de position identiques (8) et qu'ensuite, dans une seconde partie (6), indépendante, disposée à distance fixée de la première partie (5), échangeable, du dispositif de poinçonnage (4), on poinçonne dans chaque feuille continue (1 ; 2 ; 3) une structure de feuille (9 ; 10) caractéristique de la feuille continue respective (1, 2 ; 3), la seconde partie (6) du dispositif de poinçonnage (4) étant chaque fois échangée après le passage d'une feuille continue à travers le dispositif de poinçonnage (4).

2. Procédé selon la revendication 1, caractérisé par le fait que l'on poinçonne et que l'on colle ensemble une feuille continue de métal (2) et une feuille continue de plastique (1).

3. Procédé selon la revendication 1, caractérisé par le fait que l'on poinçonne et que l'on colle ensemble une feuille continue de métal (2) et au moins deux feuilles continues de plastique (1 ; 3), dans lequel on colle d'abord la feuille continue de métal (2) avec une feuille continue de plastique (1) puis on colle la seconde feuille continue de plastique (3) sur la feuille continue de métal (2) ou sur la première feuille continue de plastique (1).

4. Procédé selon l'une des revendications 1 à 3, caractérisé par le fait qu'avant et/ou pendant le collage des feuilles continues (1 ; 2 ; 3), des picots de guidage pénètrent dans les repères de position (8), situés l'un au dessus de l'autre, des feuilles continues (1 ; 2 ; 3) à coller ensemble.

5. Installation pour la fabrication d'un composite multicouche à partir de plusieurs feuilles continues (1 ; 2 ; 3) avec un dispositif de poinçonnage (4) et un dispositif de stratification (11), caractérisée par le fait que le dispositif de poinçonnage (4) présente deux outils de poinçonnage (5 ; 6), indépendants l'un de l'autre, disposés à distance fixée l'un de l'autre, pour poinçonner chaque fois une feuille continue (1 ; 2 ; 3) avec les deux outils de poinçonnage (5 ; 6) et que la seconde partie (6) des outils de poinçonnage (5 ; 6) est échangeable.

6. Installation selon la revendication 5, caractérisée par le fait que le dispositif de stratification (11) présente un dispositif d'avance (12) avec des picots de guidage, un dispositif (14) d'exécution de points de jonction en bordure ainsi qu'un dispositif (13) pour le collage sur toute la surface.
